# EUROPEAN PATENT APPLICATION

(11) **EP 4 145 884 A1**
(43) Date of publication of application: **08.03.2023**
(21) Application number: 21796954.2
(22) Date of filing: 19.04.2021
(51) Int. Cl.: H04W 24/02

(54) **ELECTRONIC DEVICE AND METHOD FOR WIRELESS COMMUNICATION, AND COMPUTER-READABLE STORAGE MEDIUM**

(30) Priority: 26.04.2020 CN 202010338095
(71) Applicant: Sony Group Corporation, Minato-Ku, Tokyo, 108-0075 (JP)
(72) Inventor: CAO, Jianfei, Beijing 100028 (CN)
(74) Representative: D Young & Co LLP
(86) International application number: PCT/CN2021/087971
(87) International publication number: WO 2021/218676

(57) **Abstract**

Provided are an electronic device and method for wireless communication, and a computer-readable storage medium. The electronic device for wireless communication comprises a processing circuit, wherein the processing circuit is configured to: receive, from a base station serving the electronic device, downlink signals for detecting whether beams have faults; and to determine, when the number of instances of the channel quality represented by any downlink signal from among the downlink signals being lower, by a predetermined deviation value, than the channel quality represented by a candidate downlink signal, which is determined by the electronic device, reaches a first count value, that a beam, which corresponds to the any downlink signal, is a faulty beam, and to send a beam fault recovery request to the base station, so as to recover the faulty beam.

## Description

This application claims the priority of Chinese Patent Application No. 202010338095.3, entitled "ELECTRONIC DEVICE AND METHOD FOR WIRELESS COMMUNICATION, AND COMPUTER-READABLE STORAGE MEDIUM", filed with the Chinese Patent Office on April 26, 2020, the entire contents of which are incorporated herein by reference.

### FIELD

The present disclosure relates to the technical field of wireless communications, in particular to partial beam failure recovery. More particularly, the present disclosure relates to an electronic device and a method for wireless communication for partial beam failure recovery and a computer-readable storage medium.

### BACKGROUND

In a 5G millimeter wave system, due to severe channel fluctuation, a beam failure (that is also known as a beam misalignment or a beam failure) between a base station and a user equipment may occur. How to avoid frequent wireless link failure caused by beam failure is a key problem to be solved in the 5G millimeter wave system.

### SUMMARY

Brief summary of embodiments of the present disclosure is given hereinafter, to provide basic understanding for certain aspects of the present disclosure. It should be understood that, the summary is not exhaustive summary of the present disclosure. The summary is not intended to determine key parts or important parts of the present disclosure, and is not intended to limit the scope of the present disclosure. An object of the summary is only to give some concepts of the present disclosure in a simplified form, as preamble of the detailed description later.

An electronic device for wireless communication is provided according to an aspect of the present disclosure. The electronic device includes processing circuitry. The processing circuitry is configured to receive downlink signals for monitoring whether a beam failure occurs from a base station providing service for the electronic device; and determine, in a case that the number of times of an event that channel quality characterized by any one downlink signal of the downlink signals is less than the channel quality characterized by a candidate downlink signal determined by the electronic device by a predetermined deviation value reaches a first count value, that a beam corresponding to the any one downlink signal is a failed beam and transmit a beam failure recovery request to the base station to recover the failed beam.

The electronic device according to the embodiment of the present disclosure may perform partial beam failure recovery in advance when a beam failure occurs in part of the links between the electronic device and the base station, so that possibility of all link failures is greatly reduced, thereby effectively improving communication quality. In addition, the electronic device may determine whether the beam is a failed beam based on the candidate downlink signal determined by the electronic device. Therefore, the electronic device has autonomous performance.

An electronic device for wireless communication is provided according to another aspect of the present disclosure. The electronic device includes processing circuitry. The processing circuitry is configured to receive downlink signals for monitoring whether a beam failure occurs from a base station providing service for the electronic device; and in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, determine that a beam corresponding to the any one downlink signal is a failed beam and transmit a beam failure recovery request to the base station, to recover the failed beam. The second threshold is less than the first threshold, and the third count value is less than the second count value.

The electronic device according to the embodiment of the present disclosure may perform partial beam failure recovery in advance when a beam failure occurs in part of the links between the electronic device and the base station, so that possibility of all link failures is greatly reduced, thereby effectively improving communication quality. Further, by setting the condition (2), requirements of VIP users for high communication quality of the communication link can be met.

An electronic device for wireless communication is provided according to another aspect of the present disclosure. The electronic device includes processing circuitry. The processing circuitry is configured to receive a beam failure recovery request transmitted from user equipment when it is determined that a failed beam exists, to recover the failed beam, where the user equipment receives downlink signals for monitoring whether a beam failure occurs from the electronic device and determines, in a case that the number of times of an event that channel quality characterized by any one downlink signal of the downlink signals is less than the channel quality characterized by a candidate downlink signal determined by the user equipment by a predetermined deviation value reaches a first count value, that a beam corresponding to the any one downlink signal is a failed beam.

The electronic device according to the embodiment of the present disclosure may perform partial beam failure recovery in advance when a beam failure occurs in part of the links between the electronic device and the user equipment, so that possibility of all link failures is greatly reduced, thereby effectively improving communication quality.

An electronic device for wireless communication is provided according to another aspect of the present disclosure. The electronic device includes processing circuitry. The processing circuitry is configured to receive a beam failure recovery request transmitted from user equipment when it is determined that a failed beam exists, to recover the failed beam, where the user equipment receives downlink signals for monitoring whether a beam failure occurs from the electronic device and determines, in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, that a beam corresponding to the any one downlink signal is the failed beam. The second threshold is less than the first threshold, and the third count value is less than the second count value.

The electronic device according to the embodiment of the present disclosure may perform partial beam failure recovery in advance when a beam failure occurs in part of the links between the electronic device and the user equipment, so that possibility of all link failures is greatly reduced, thereby effectively improving communication quality. Further, requirements of VIP users for high communication quality of the communication link can be met.

A method for wireless communication is provided according to another aspect of the present disclosure. The method includes: receiving downlink signals for monitoring whether a beam failure occurs from a base station providing service for an electronic device; and in a case that the number of times of an event that channel quality characterized by any one downlink signal of the downlink signals is less than the channel quality characterized by a candidate downlink signal determined by the electronic device by a predetermined deviation value reaches a first count value, determining that a beam corresponding to the any one downlink signal is a failed beam, and transmitting a beam failure recovery request to the base station to recover the failed beam.

A method for wireless communication is provided according to another aspect of the present disclosure. The method includes: receiving downlink signals for monitoring whether a beam failure occurs from a base station; and in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, determining that a beam corresponding to the any one downlink signal is a failed beam, and transmitting a beam failure recovery request to the base station, to recover the failed beam, wherein the second threshold is less than the first threshold, and the third count value is less than the second count value.

A method for wireless communication is provided according to another aspect of the present disclosure. The method includes: receiving a beam failure recovery request transmitted from user equipment when it is determined that a failed beam exists, to recover the failed beam, where the user equipment receives downlink signals for monitoring whether a beam failure occurs from an electronic device, and determines, in a case that the number of times of an event that channel quality characterized by any one downlink signal of the downlink signals is less than the channel quality characterized by a candidate downlink signal determined by the user equipment by a predetermined deviation value reaches a first count value, that a beam corresponding to the any one downlink signal is a failed beam.

A method for wireless communication is provided according to another aspect of the present disclosure. The method includes: receiving a beam failure recovery request transmitted from user equipment when it is determined that a failed beam exists, to recover the failed beam, wherein the user equipment receives downlink signals for monitoring whether a beam failure occurs from an electronic device, and determines, in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, that a beam corresponding to the any one downlink signal is the failed beam. The second threshold is less than the first threshold, and the third count value is less than the second count value.

Computer program codes and a computer program product for implementing the method for wireless communication, and a computer-readable storage medium on which the computer program codes for implementing the method for wireless communication are provided according to another aspect of the present disclosure.

### BRIEF DESCRIPTION OF THE DRAWINGS

In order to further set forth the above and other advantages and features of the present disclosure, specific embodiments of the present disclosure are further described in detail below in conjunction with the drawings. The drawings together with the following detailed description are included in this specification and form a part of this specification. Elements with identical functions and structures are denoted by identical reference numerals. It should be understood that, these figures only describe typical examples of the present disclosure, and should not be regarded as limitations to the scope of the present disclosure. In the drawings:
Figure 1 is a block diagram showing functional modules of an electronic device for wireless communication according to an embodiment of the present disclosure;
Figures 2A and 2B are diagrams showing processing examples of beam failure recovery in the conventional technology;
Figure 3 is a diagram showing a processing example of partial beam failure recovery according to an embodiment of the present disclosure;
Figure 4 is a block diagram showing functional modules of an electronic device for wireless communication according to another embodiment of the present disclosure;
Figure 5 is a diagram showing a processing example of partial beam failure recovery according to another embodiment of the present disclosure;
Figure 6 is a block diagram showing functional modules of an electronic device for wireless communication according to another embodiment of the present disclosure;
Figure 7 is a block diagram showing functional modules of an electronic device for wireless communication according to another embodiment of the present disclosure;
Figure 8 is a flow chart of a method for wireless communication according to an embodiment of the present disclosure;
Figure 9 is a flow chart of a method for wireless communication according to another embodiment of the present disclosure;
Figure 10 is a flow chart of a method for wireless communication according to another embodiment of the present disclosure;
Figure 11 is a flow chart of a method for wireless communication according to another embodiment of the present disclosure;
Figure 12 is a block diagram showing a first schematic configuration example of an eNB or a gNB to which the technology of the present disclosure may be applied;
Figure 13 is a block diagram showing a second schematic configuration example of an eNB or a gNB to which the technology of the present disclosure may be applied;
Figure 14 is a block diagram showing a schematic configuration example of a smart phone to which the technology of the present disclosure may be applied;
Figure 15 is a block diagram showing a schematic configuration example of a car navigation apparatus to which the technology of the present disclosure may be applied; and
Figure 16 is a block diagram of an exemplary structure of a personal computer for implementing embodiments according to the present disclosure.

### DETAILED DESCRIPTION OF EMBODIMENTS

Hereinafter, exemplary embodiments of the present disclosure are described in conjunction with the drawings. For the sake of clarity and conciseness, the description does not describe all features of actual embodiments. However, it should be understood that in developing any such actual embodiment, many decisions specific to the embodiments must be made, so as to achieve specific objects of a developer; for example, those limitation conditions related to systems and services are satisfied, and these limitation conditions possibly vary as embodiments are different. In addition, it should also be appreciated that, although developing work may be very complicated and time-consuming, such developing work is only routine tasks for those skilled in the art benefiting from the present disclosure.

It should also be noted herein that, to avoid the present disclosure from being obscured due to unnecessary details, only those apparatus structures and/or processing steps closely related to the solution according to the present disclosure are shown in the drawings, while omitting other details not closely related to the present disclosure.

The embodiments according to the present disclosure are described in detail with reference to the drawings below.

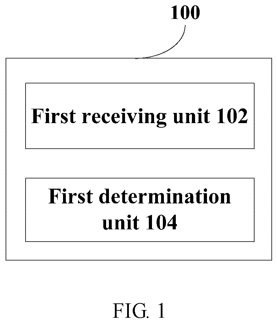

Figure 1 is a block diagram showing functional modules of an electronic device 100 for wireless communication according to an embodiment of the present disclosure. As shown in Figure 1, the electronic device 100 includes a first receiving unit 102 and a first determination unit 104. The first receiving unit 102 may be configured to receive downlink signals for monitoring whether a beam failure occurs from a base station providing service for the electronic device 100. The first determination unit 104 may be configured to determine, in a case that the number of times of an event that channel quality characterized by any one of the downlink signal is less than the channel quality characterized by a candidate downlink signal determined by the electronic device by a predetermined deviation value reaches a first count value, that a beam corresponding to the any one downlink signal is a failed beam and transmit a beam failure recovery request to the base station to recover the failed beam.

The first receiving unit 102 and the first determination unit 104 may be implemented by one or more processing circuitries, and the processing circuitries may be implemented, for example, as a chip.

The electronic device 100 may be, for example, arranged on a user equipment (UE) side, or may be communicatively connected to the UE. Here, it is further to be noted that the electronic device 100 may be implemented in a chip level or an apparatus level. For example, the electronic device 100 may function as the user equipment itself and may further include external devices such as a memory and a transceiver (not shown in Figure 1). The memory may be configured to store programs to be executed and related data information when the UE implements various functions. The transceiver may include one or more communication interfaces to support communications with different devices (for example, a base station and other user equipment). Implementations of the transceiver are not limited herein.

The monitoring whether a beam failure occurs is that monitoring whether a link between the electronic device 100 and the base station that communicates using a beam is faulty. Hereinafter, the beam failure is referred to as beam fail.

As an example, the downlink signals for monitoring whether a beam failure occurs may be a downlink reference signal (that may be a periodic channel state information reference signal (CSI-RS) or a synchronization signal block (SSB)) for monitoring whether a beam failure occurs. The downlink signal for monitoring whether a beam failure occurs may be known simply as a beam failure detection reference signal (BFD RS). The BFD RS may be in a reference signal set (that is formed by CSI-RS and/or SSB) which is called as q0. The reference signal set q0 may include up to two BFD RSs (that are respectively labeled as RSO and RS1). Each of the BFD RSs is Quasi-Co location (QCL) related to a demodulation reference signal (DMRS) of a control channel resource set (CORESET), and each of the BFD RSs may be CSI-RS or SSB. The above "any one downlink signal" may be, for example, any one of RSO and RS1. For example, "any one" may be one of only RS0, only RS1, and both RSO and RS1. Accordingly, the "a beam corresponding to the any one downlink signal is a failed beam" may be one of beam (link) failure corresponding to RS0, beam (link) failure corresponding to RS1, and beam (link) failure corresponding to both RSO and RS1.

As an example, the channel quality characterized by the downlink signal may be the channel quality of the link between the base station and the electronic device 100 that communicates using a beam corresponding to the downlink signal. For example, the channel quality is estimated by the electronic device 100.

As an example, the channel quality may be characterized by a block error rate (BLER). Those skilled in the art may understand that in a case that the BLER is used to characterize the channel quality, the channel quality characterized by the downlink signal less than the channel quality characterized by the candidate downlink signal is that a BLER of the link that communicates using the beam corresponding to the downlink signal is greater than a BLER of the link that communicates using a beam corresponding to the candidate downlink signal.

As an example, the channel quality may be characterized by a reference signal receiving power of a physical layer (L1-RSRP). Those skilled in the art may understand that in a case that the L1-RSRP is used to characterize the channel quality, the channel quality characterized by the downlink signal less than the channel quality characterized by the candidate downlink signal is that an L1-RSRP of the link that communicates using the beam corresponding to the downlink signal is less than an L1-RSRP of the link that communicates using the beam corresponding to the candidate downlink signal.

As an example, the channel quality may be characterized by a signal to interference noise ratio of the physical layer of a physical layer (L1-SINR). Those skilled in the art may understand that in a case that the L1-SINR is used to characterize the channel quality, the channel quality characterized by the downlink signal less than the channel quality characterized by the candidate downlink signal is that an L1-SINR of the link that communicates using the beam corresponding to the downlink signal is less than an L1-SINR of the link that communicates using the beam corresponding to the candidate downlink signal.

Those skilled in the art may further think of other ways to characterize the channel quality, and the other ways are not described herein.

As an example, the electronic device 100 may dynamically determine a candidate downlink signal according to an application scenario. As an example, the electronic device 100 may determine a candidate downlink signal based on a predetermined channel quality index received from the base station. For example, the base station predefines a predetermined channel quality value. In a case that the electronic device 100 knows that the channel quality of the link between the base station and the electronic device 100 that communicates through a beam is greater than the predetermined channel quality value through measurement, the electronic device 100 may determine the downlink signal corresponding to the beam as a candidate downlink signal. Those skilled in the art may further think of other ways to determine the candidate downlink signal, and the other ways are not described herein.

As an example, those skilled in the art may determine a predetermined deviation value according to experience, actual requirements or application scenarios. As an example, the predetermined deviation value may be 5%, 10%, or the like of the channel quality characterized by the candidate downlink signal.

As an example, those skilled in the art may determine the first count value according to experience, actual requirements or application scenarios.

In an embodiment according to the present disclosure, the electronic device 100 transmits a beam failure recovery request (beam fail recovery request) in a case that the electronic device 100 determines that the beam corresponding to any one of downlink signals is a failed beam, rather than transmitting the beam failure recovery request in a case that beams corresponding to all downlink signals are failed beams. Therefore, the beam failure recovery (beam fail recovery, BFR) in the embodiments of the present disclosure may be referred to as partial beam failure recovery (partial beam fail recovery).

As an example, the channel quality characterized by the downlink signal being less than the channel quality characterized by the candidate downlink signal by the predetermined deviation value is an event related to partial beam failure recovery at layer 1 (that is, the physical layer).

As an example, in a case that the channel quality characterized by any one downlink signal (for example, any one of RSO and RS1) is less than the channel quality characterized by the candidate downlink signal by the predetermined deviation value, the physical layer of the electronic device 100 transmits a beam failure instance (BFI) to a media access control (MAC) layer, and increases a value of a counter reserved by the MAC layer corresponding to the any one downlink signal by one. When the value of the counter of a BFI corresponding to the any one downlink signal received from the physical layer accumulates to the first count value, the MAC layer transmits a BFR request, that is, the electronic device 100 transmits a beam failure recovery request to the base station to recover the failed beam.

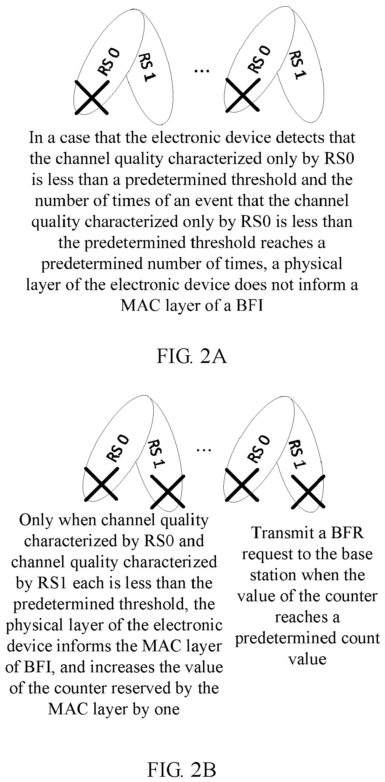

Figures 2A and 2B show processing examples of beam failure recovery in the conventional technology. In Figure 2A, in a case that the electronic device detects that the channel quality characterized only by RSO in q0 is less than a predetermined threshold and the number of times of an event that the channel quality characterized only by RSO in q0 is less than the predetermined threshold reaches a predetermined number of times, the physical layer of the electronic device does not inform the MAC layer of the BFI. In Figure 2B, only when the channel quality characterized by RSO and the channel quality characterized by RS 1 each is less than the predetermined threshold, the physical layer of the electronic device informs the MAC layer of the BFI, increases the value of the counter reserved by the MAC layer by one, and transmits a BFR request to the base station when the value of the counter reaches a predetermined count value. That is, in the conventional technology, when, for example, a beam corresponding to only one downlink reference signal (such as, RS0) is in a beam failure state, the electronic device cannot perform beam failure recovery.

The electronic device 100 according to an embodiment of the present disclosure may perform partial beam failure recovery in advance when a beam failure occurs in part of the links between the electronic device 100 and the base station (for example, when one of a link communicating with the beam corresponding to RSO and a link communicating with the beam corresponding to RS 1 is faulty), so that possibility of all link failures is greatly reduced, thereby effectively improving communication quality. In addition, the electronic device 100 may determine whether the beam is a failed beam based on the candidate downlink signal determined by the electronic device 100. Therefore, the electronic device 100 has autonomous performance.

As an example, the first determination unit 104 may be configured to transmit the beam failure recovery request at an occasion of an uplink control channel immediately after the failed beam is determined in time, that is, to transmit the beam failure recovery request at an occasion of a first uplink control channel that occurs after the failed beam is determined. The beam failure recovery request includes information of ID characterizing the failed beam.

As an example, the first determination unit 104 may be configured to give up transmitting the beam failure recovery request at the occasion of the uplink control channel immediately after the failed beam is determined in time, and transmit the beam failure recovery request at an occasion of a next uplink control channel, in a case that the electronic device 100 has symmetry between a downlink beam and an uplink beam and the uplink control channel corresponds to the failed beam.

As an example, the uplink control channel may be a physical uplink control channel (PUCCH).

For example, in a case that the electronic device 100 has symmetry between the downlink beam (that is, a downlink receiving beam) and the uplink beam (that is, an uplink transmitting beam) and an uplink transmitting beam used by configured PUCCH-SpatialRelationInfo (that is, spatial relation information) of the PUCCH occasion immediately after the failed beam is determined in time is a failed downlink receiving beam (that is, the failed beam), the electronic device 100 gives up transmitting the beam failure recovery request at this PUCCH and transmits the beam failure recovery request at an occasion of a next PUCCH, which can avoid a transmission failure of the beam failure recovery request caused by use of a PUCCH immediately after the failed beam is determined in time. For example, the symmetry between the downlink beam and the uplink beam is that the electronic device 100 uses the downlink receiving beam as the uplink transmitting beam for uplink transmission.

As an example, the first determination unit 104 may be configured to associate an ID of the downlink signal with an ID of scheduling request (SR) resource in the PUCCH, to characterize an ID of a failed beam corresponding to any one downlink signal by the ID of the scheduling request resource. In this way, the electronic device 100 may transmit information about the ID of the failed beam to the base station using the PUCCH.

For example, the ID of the downlink signal may include an ID of RSO and an ID of RS1.

For example, if the ID of RSO and the ID of RS1 are associated with SR resource 0 and SR resource 1 through radio resource control (RRC) configuration, the electronic device 100 may select the SR resource 0 or the SR resource 1 according to a BFD RS (that is, RSO or RS1) corresponding to the failed beam, so that the ID of the SR resource characterizes the ID of the failed beam.

In a NR system, a PUCCH format currently defined includes a format 0, a format 1, a format 2, a format 3, and a format 4. The format 0 carries information according to a cyclic shift sequence which generates PUCCH. The format 0 can carry less information, and thus is small and flexible. The format 1 may carry a small amount of information through a payload.

As an example, the first determination unit 104 may be configured to characterize the ID of the failed beam by setting a parameter of a predetermined cyclic shift sequence in the PUCCH format 0. In this way, the electronic device 100 may transmit information about the ID of the failed beam to the base station using the PUCCH.

For example, the electronic device 100 may characterize the ID of the failed beam by setting a parameter M_CS of the cyclic shift sequence in the PUCCH format 0. For example, M_ CS set to a first value indicates that the beam corresponding to RSO is a failed beam, and M_ CS set to a second value indicates that the beam corresponding to RS1 is a failed beam, and the first value is different from the second value.

As an example, the first determination unit 104 may be configured to characterize the ID of the failed beam by using a predetermined information bit in the PUCCH format 1. In this way, the electronic device 100 may transmit information about the ID of the failed beam to the base station using the PUCCH.

For example, the electronic device 100 may characterize the ID of the failed beam by a predetermined information bit b(x) in the PUCCH format 1. For example, b(x) set to zero indicates that the beam corresponding to RSO is a failed beam, and b(x) set to one indicates that the beam corresponding to RS1 is a failed beam.

It should be noted that although the above describes a case where the electronic device 100 may transmit information about the ID of the failed beam to the base station using the PUCCH, the electronic device 100 may transmit the beam failure recovery request (the beam failure recovery request does not include information about the ID of the failed beam, that is, the beam failure recovery request does not clearly indicate which beam is a failed beam) indicating that a beam failure occurs to the base station only using the PUCCH, that is, the electronic device 100 does not use PUCCH to transmit information about the ID of the failed beam to the base station. In a case that the electronic device 100 does not use PUCCH to transmit information about the ID of the failed beam to the base station, the electronic device 100 may use a media access control control-element (MAC CE) to transmit information about the ID of the failed beam to the base station.

As an example, the first determination unit 104 may further be configured to transmit information about the candidate downlink signal to the base station, and replace the failed beam with the beam corresponding to the candidate downlink signal.

As an example, the first determination unit 104 may be configured to transmit information about the candidate downlink signal to the base station using the MAC CE.

The candidate downlink signal is selected and determined by the electronic device 100, and thus the electronic device 100 may actively replace the failed beam with the beam corresponding to the candidate downlink signal rather than a beam specified by the base station.

As an example, the first determination unit 104 may be configured to replace the failed beam with the beam corresponding to the candidate downlink signal when a confirmation of correct decoding of the information about the candidate downlink signal is received from the base station via a downlink control channel.

As an example, the downlink control channel is, for example, a physical downlink control channel (PDCCH).

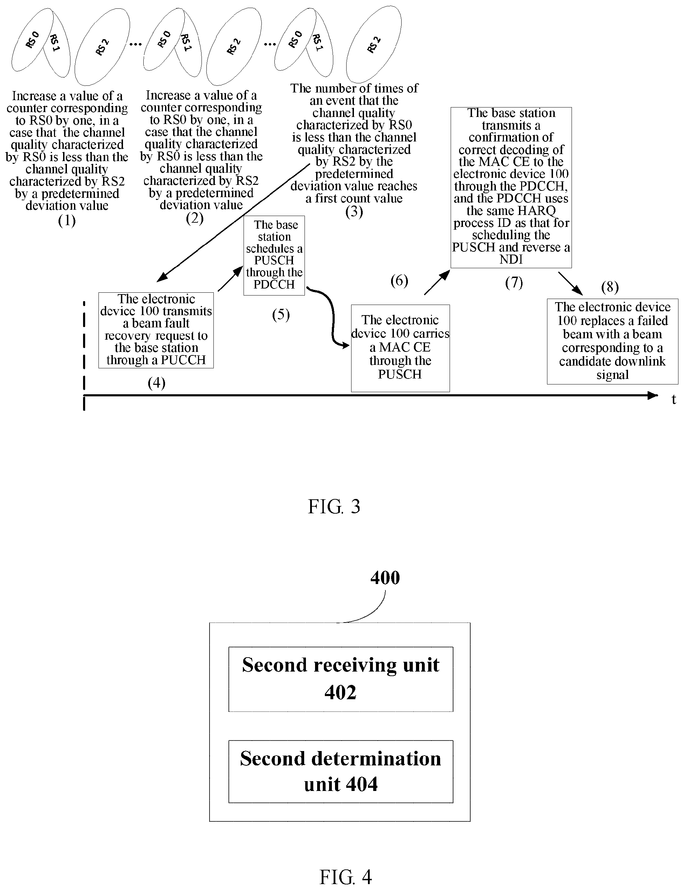

Figure 3 is a diagram showing a processing example of partial beam failure recovery according to an embodiment of the present disclosure. Figure 3 shows the beams (that are respectively labeled as RSO and RS1) respectively corresponding to RSO and RS1 in the set q0 and the beam (that is labeled as RS2) corresponding to the candidate downlink signal RS2. For convenience of description, the beam corresponding to RSO is taken as the failed beam in the following description. An initial value of a counter corresponding to RSO is zero, and it is assumed that the predetermined deviation value is 5% of channel quality characterized by RS2. Whenever the channel quality characterized by RSO is less than the channel quality characterized by RS2 by the predetermined deviation value, the value of the counter corresponding to RSO is increased by one (as shown in (1) and (2) in Figure 3). In a case that the number of times of an event that the channel quality characterized by RSO is less than the channel quality characterized by RS2 by the predetermined deviation value reaches the first count value (for example, the first count value is 3), the electronic device 100 determines that the beam corresponding to RSO is the failed beam (as shown in (3) in Figure 3), and transmits a beam failure recovery request to the base station through a PUCCH (as shown in (4) in Figure 3). After receiving the beam failure recovery request from the electronic device 100, the base station schedules a physical uplink shared channel (PUSCH) through the PDCCH (as shown in (5) in Figure 3), and the electronic device 100 may carry a MAC CE through the PUSCH to transmit information about the candidate downlink signal to the base station (in a case that the electronic device 100 transmits a beam failure recovery request indicating that a beam failure occurs to the base station only using the PUCCH rather than transmitting information about the ID of the failed beam to the base station using the PUCCH, the MAC CE may further include information about the ID of the failed beam) (as shown in (6) in Figure 3). After receiving the MAC CE, the base station transmits a confirmation of correct decoding of the MAC CE to the electronic device 100 through the PDCCH, and the PDCCH uses the same hybrid automatic retransmission request (HARQ) process ID as that for scheduling the PUSCH and reverse an information bit of a new data indicator (NDI) (as shown in (7) in Figure 3). After receiving the confirmation of the correct decoding of the MAC CE from the base station through the PDCCH, the electronic device 100 knows that a downlink signal (for example, RS0) corresponding to the failed beam or a CORESET corresponding to the downlink signal uses a beam corresponding to a reported candidate downlink signal (RS2), so that the electronic device 100 replaces the failed beam with the beam corresponding to the candidate downlink signal (as shown in (8) in Figure 3).

In a case that the beam (link) corresponding to RS 1 is faulty, and both the beam (link) corresponding to RSO and the beam (link) corresponding to RS 1 are faulty, processing of partial beam fault recovery may refer to the processing of partial beam fault recovery of Figure 3, and the processing of partial beam fault recovery is not repeated herein.

An electronic device for wireless communication is further provided according to another aspect of the present disclosure.

Figure 4 is a block diagram showing functional modules of an electronic device 400 for wireless communication according to another embodiment of the present disclosure. As shown in Figure 4, the electronic device 400 includes a second receiving unit 402 and a second determination unit 404. The second receiving unit 402 is configured to receive downlink signals for monitoring whether a beam failure occurs from a base station providing service for the electronic device 400. The second determination unit 404 is configured to determine, in a case that either of (1) the number of times of an event that the channel quality characterized by any one of the downlink signal is less than a first threshold reaching a second count value and (2) the number of times of an event that the channel quality is less than a second threshold reaching a third count value before the number of times of an event that the channel quality is less than the first threshold reaching the second count value is met, that a beam corresponding to the any one downlink signal is a failed beam and transmit a beam failure recovery request to the base station, to recover the failed beam. The second threshold is less than the first threshold, and the third count value is less than the second count value.

The second receiving unit 402 and the second determination unit 404 may be implemented by one or more processing circuitries, and the processing circuitries may be implemented, for example, as a chip.

The electronic device 400 may be, for example, arranged on a UE side, or may be communicatively connected to the UE. Here, it is further to be noted that the electronic device 400 may be implemented in a chip level or an apparatus level. For example, the electronic device 400 may function as the user equipment itself and may further include external devices such as a memory and a transceiver (not shown in Figure 4). The memory may be configured to store programs to be executed and related data information when the user equipment implements various functions. The transceiver may include one or more communication interfaces to support communications with different devices (for example, a base station and other user equipment). Implementations of the transceiver are not limited herein.

For the downlink signals for monitoring whether a beam failure occurs and any one downlink signal, references are made to the description of the corresponding part in the electronic device 100. Hereinafter, RSO and RS1 are used to represent downlink signals for monitoring whether a beam failure occurs.

As an example, the channel quality may be characterized by a block error rate (BLER). Those skilled in the art may understand that in a case that the BLER is used to characterize the channel quality, the channel quality characterized by the downlink signal less than a predetermined threshold (that is, the first threshold or the second threshold) is that a BLER of a link that communicates using a beam corresponding to the downlink signal is greater than the predetermined threshold.

As an example, the channel quality may be characterized by a reference signal receiving power of a physical layer (L1-RSRP). Those skilled in the art may understand that in a case that the L1-RSRP is used to characterize the channel quality, the channel quality characterized by the downlink signal less than the predetermined threshold is that an L1-RSRP of the link that communicates using the beam corresponding to the downlink signal is less than the predetermined threshold.

As an example, the channel quality may be characterized by a signal to interference noise ratio of the physical layer of a physical layer (L1-SINR). Those skilled in the art may understand that in a case that the L1-SINR is used to characterize the channel quality, the channel quality characterized by the downlink signal less than the predetermined threshold is that an L1-SINR of the link that communicates using the beam corresponding to the downlink signal is less than the predetermined threshold

Those skilled in the art may further think of other ways to characterize the channel quality, and the other ways are not described herein.

As an example, those skilled in the art may determine the first threshold, the second count value, the second threshold and the third count value according to experiences, actual requirements or application scenarios.

In the electronic device 400, in addition to the condition (1) that the number of times of an event that the channel quality characterized by any one downlink signal of the downlink signals is less than a first threshold reaching a second count value, the condition (2) that the number of times of an event that the channel quality is less than a second threshold reaching a third count value before the number of times of an event that the channel quality is less than the first threshold reaching the second count value is met is set. In addition, the second threshold is less than the first threshold, and the third count value is less than the second count value. The setting of the condition (2) may meet requirements of VIP users for high communication quality of the communication link.

In the electronic device 400 according to the embodiment of the present disclosure, the electronic device 400 transmits a beam failure recovery request in a case that it is determined that any one of the conditions (1) and (2) is met (that is, in a case that the beam corresponding to any one downlink signal is a failed beam), rather than transmitting the beam failure recovery request in a case that beams corresponding to all downlink signals are failed beams. Therefore, the beam failure recovery of the electronic device 400 is the partial beam failure recovery.

As an example, the channel quality characterized by the downlink signal less than the predetermined threshold (that is, the first threshold or the second threshold) is an event related to partial beam failure recovery of the layer 1 (that is, the physical layer).

As an example, any one downlink signal is taken as RSO in the following description. In a case that the channel quality characterized by RSO is less than the first threshold, the physical layer of the electronic device 400 transmits a BFI to the MAC layer, and increases a value of a first counter corresponding to the first threshold reserved by the MAC layer by one. In a case that the channel quality characterized by RSO is less than the second threshold, the physical layer of the electronic device 400 transmits a BFI to the MAC layer, and increases a value of a second counter corresponding to the second threshold reserved by the MAC layer by one. In a case that the electronic device 400 determines that any one of the conditions (1) and (2) is met, the MAC layer transmits a BFR request, that is, the electronic device 400 transmits a beam failure recovery request to the base station to recover the failed beam.

The electronic device 400 according to the embodiment of the present disclosure may perform partial beam failure recovery in advance when a beam failure occurs in part of the links between the electronic device 400 and the base station (for example, when one of a link communicating with the beam corresponding to RSO and a link communicating with the beam corresponding to RS 1 is a failed beam), so that possibility of all link failures is greatly reduced, thereby effectively improving communication quality. Further, by setting the condition (2), requirements of VIP users for high communication quality of the communication link can be met.

As an example, the second determination unit 404 may be configured to transmit the beam failure recovery request at an occasion of an uplink control channel immediately after the failed beam is determined in time, that is, to transmit the beam failure recovery request at an occasion of a first uplink control channel that occurs after the failed beam is determined. The beam failure recovery request includes information of ID characterizing the failed beam.

As an example, the second determination unit 404 may be configured to give up transmitting the beam failure recovery request at the occasion of the uplink control channel immediately after the failed beam is determined in time, and transmit the beam failure recovery request at an occasion of a next uplink control channel, in a case that the electronic device 400 has symmetry between a downlink beam and an uplink beam and the uplink control channel corresponds to the failed beam.

As an example, the uplink control channel may be a physical uplink control channel (PUCCH).

For example, in a case that the electronic device 400 has symmetry between the downlink beam (that is, a downlink receiving beam) and the uplink beam (that is, an uplink transmitting beam) and an uplink transmitting beam used by configured PUCCH-SpatialRelationInfo of the PUCCH occasion immediately after the failed beam is determined in time is a failed downlink receiving beam (that is, the failed beam), the electronic device 400 gives up transmitting the beam failure recovery request at this PUCCH and transmits the beam failure recovery request at an occasion of a next PUCCH, which can avoid a transmission failure of the beam failure recovery request caused by use of a PUCCH immediately after the failed beam is determined in time. For example, the symmetry between the downlink beam and the uplink beam is that the electronic device 400 uses the downlink receiving beam as the uplink transmitting beam for uplink transmission.

As an example, the first determination unit 404 may be configured to associate an ID of the downlink signal with an ID of scheduling request resource in the PUCCH, to characterize an ID of a failed beam corresponding to any one downlink signal by the ID of the scheduling request resource. In this way, the electronic device 400 may transmit information about the ID of the failed beam to the base station using the PUCCH.

For example, the ID of the downlink signal may include an ID of RSO and an ID of RS1.

For example, if the ID of RSO and the ID of RS1 are associated with SR resource 0 and SR resource 1 through radio resource control (RRC) configuration, the electronic device 400 may select the SR resource 0 or the SR resource 1 according to a BFD RS (that is, RSO or RS1) corresponding to the failed beam, so that the ID of the SR resource characterizes the ID of the failed beam.

As an example, the second determination unit 404 may be configured to characterize the ID of the failed beam by setting a parameter of a predetermined cyclic shift sequence in the PUCCH format 0. In this way, the electronic device 400 may transmit information about the ID of the failed beam to the base station using the PUCCH.

For example, the electronic device 400 may characterize the ID of the failed beam by setting a parameter M_CS of the cyclic shift sequence in the PUCCH format 0. For example, M_ CS set to a first value indicates that the beam corresponding to RSO is a failed beam, and M_ CS set to a second value indicates that the beam corresponding to RS1 is a failed beam, and the first value is different from the second value.

As an example, the second determination unit 404 may be configured to characterize the ID of the failed beam by using a predetermined information bit in the PUCCH format 1. In this way, the electronic device 400 may transmit information about the ID of the failed beam to the base station using the PUCCH.

For example, the electronic device 400 may characterize the ID of the failed beam by a predetermined information bit b(x) in the PUCCH format 1. For example, b(x) set to zero indicates that the beam corresponding to RSO is a failed beam, and b(x) set to one indicates that the beam corresponding to RS1 is a failed beam.

As an example, the electronic device 400 may communicate using a new beam designated by the base station instead of the failed beam. As an example, the second determination unit 404 may be configured to replace the failed beam based on a beam corresponding to information updated by the base station through a MAC CE.

As an example, after the base station receives the beam failure recovery request from the electronic device 400, the base station may schedule a physical downlink shared channel (PDSCH) through the PDCCH, and carry the MAC CE in the PDSCH. The MAC CE updates a transmission configuration index (TCI) state of a CORESET corresponding to a BFD RS reported by the electronic device 400, that is, updates beam information corresponding to the CORESET, so as to deactivate a failed beam corresponding to the reported BFD RS, and enable a new beam for the CORESET.

When the electronic device 400 receives the MAC CE, the electronic device 400 transmits HARQ-ACK information of the PDSCH carrying the MAC CE to the base station, determines that the updated beam corresponding to the CORESET is valid after a predetermined time (for example, 3ms), and resets a value of the first counter and a value of the second counter to zero.

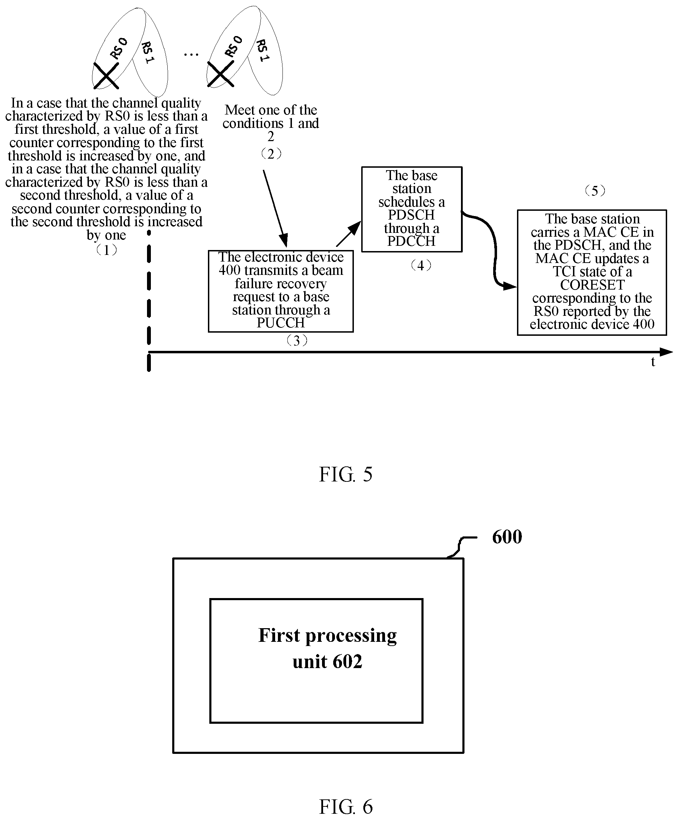

Figure 5 is a diagram showing a processing example of partial beam failure recovery according to another embodiment of the present disclosure. Figure 5 shows the beams (that are respectively labeled as RSO and RS1) corresponding to RSO and RS1 in the set q0. An initial value of the first counter and an initial value of the second counter corresponding to RSO each are set to zero. In Figure 5, any one downlink signal is taken as RSO in the following description. In a case that the channel quality characterized by RSO is less than the first threshold, a value of the first counter corresponding to the first threshold is increased by one. In a case that the channel quality characterized by RSO is less than the second threshold, a value of the second counter corresponding to the second threshold is increased by one (as shown in (1) in Figure 5). In a case that the electronic device 400 determines that one of the conditions (1) and (2) is met (as shown in (2) in Figure 5, and conditions (1) and (2) are abbreviated as conditions 1 and 2), the electronic device 400 transmits a beam failure recovery request to the base station through the PUCCH (as shown in (3) in Figure 5). After receiving the beam failure recovery request from the electronic device 400, the base station may schedule the PDSCH through the PDCCH (as shown in (4) in Figure 5), and carry the MAC CE in the PDSCH. The MAC CE updates a TCI state of a CORESET corresponding to the RSO reported by the electronic device 400 (as shown in (5) in Figure 5), so as to deactivate a failed beam corresponding to the reported RS0, and enable a new beam for the CORESET.

In a case that the beam (link) corresponding to RS 1 is faulty, and both the beam (link) corresponding to RSO and the beam (link) corresponding to RS 1 are faulty, processing of partial beam fault recovery may refer to the processing of partial beam fault recovery of Figure 5, and the processing of partial beam fault recovery is not repeated herein.

An electronic device for wireless communication is further provided according to another aspect of the present disclosure.

Figure 6 is a block diagram showing functional modules of an electronic device 600 for wireless communication according to another embodiment of the present disclosure. As shown in Figure 6, the electronic device 600 includes a first processing unit 602. The first processing unit 602 is configured to receive a beam failure recovery request transmitted from user equipment when it is determined that a failed beam exists, to recover the failed beam, wherein the user equipment receives downlink signals for monitoring whether a beam failure occurs from the electronic device; and determines, in a case that the number of times of an event that the channel quality characterized by any one downlink signal of the downlink signals is less than the channel quality characterized by a candidate downlink signal determined by the user equipment by a predetermined deviation value reaches a first count value, that a beam corresponding to the any one downlink signal is a failed beam.

The first processing unit 602 may be implemented by one or more processing circuitries, and the processing circuitries may be implemented, for example, as a chip.

The electronic device 600 may be, for example, arranged on a base station side, or may be communicatively connected to the base station. Here, it is further to be noted that the electronic device 600 may be implemented in a chip level or an apparatus level. For example, the electronic device 600 may function as the base station itself and may further include external devices such as a memory and a transceiver (not shown in Figure 6). The memory may be configured to store programs to be executed and related data information when the base station implements various functions. The transceiver may include one or more communication interfaces to support communications with different devices (for example, a user equipment and other base station). Implementations of the transceiver are not limited herein.

As an example, the user equipment may be the electronic device 100 described above, and the electronic device 600 may be a base station corresponding to the electronic device 100 as the user equipment. For the description of the downlink signal for monitoring whether a beam fails, the channel quality characterized by the downlink signal, the predetermined deviation, the candidate downlink signal, the first count value, the beam failure recovery request, and the like, references are made to the description in the corresponding part of the electronic device 100, which are not repeated herein.

The electronic device 600 according to the embodiment of the present disclosure may perform partial beam failure recovery in advance when a beam failure occurs in part of the links between the electronic device 600 and the user equipment, so that possibility of all link failures is greatly reduced, thereby effectively improving communication quality.

As an example, the first processing unit 602 may be configured to receive a beam failure recovery request through an uplink control channel. The beam failure recovery request includes information about an ID of the failed beam.

For the description of the information about the ID of the failed beam, reference is made to the description in the corresponding part of the electronic device 100, which is not repeated herein

As an example, the first processing unit 602 may further be configured to receive information about the candidate downlink signal from the user equipment.

For the description of the candidate downlink signal, reference is made to the description in the corresponding part of the electronic device 100, which is not repeated herein.

As an example, the first processing unit 602 may be configured to confirm a correct decoding of information about the candidate downlink signal through the downlink control channel (such as, the PDCCH), to inform the user equipment to replace the failed beam with a beam corresponding to the candidate downlink signal. For the description of confirming the correct decoding of the information about the candidate downlink signal through the downlink control channel, reference is made to the description in the corresponding part of the electronic device 100 (for example, Figure 3), which is not repeated herein.

An electronic device for wireless communication is further provided according to another aspect of the present disclosure.

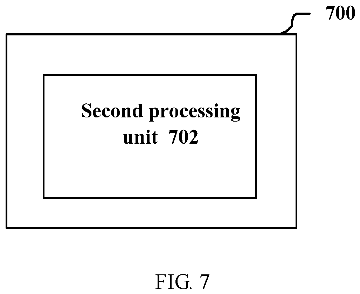

Figure 7 is a block diagram showing functional modules of an electronic device 700 for wireless communication according to another embodiment of the present disclosure. As shown in Figure 7, the electronic device 700 includes a second processing unit 702. The second processing unit 702 is configured to receive a beam failure recovery request transmitted from user equipment when it is determined that a failed beam exists, to recover the failed beam, wherein the user equipment receives downlink signals for monitoring whether a beam failure occurs from the electronic device, and determines, in a case that either of (1) the number of times of an event that the channel quality characterized by any one of the downlink signal is less than a first threshold reaching a second count value and (2) the number of times of an event that the channel quality is less than a second threshold reaching a third count value before the number of times of the event that the channel quality is less than the first threshold reaching the second count value is satisfied, that a beam corresponding to the any one downlink signal is the failed beam, where the second threshold is less than the first threshold, and the third count value is less than the second count value.

The second processing unit 702 may be implemented by one or more processing circuitries, and the processing circuitries may be implemented, for example, as a chip.

The electronic device 700 may be, for example, arranged on a base station side, or may be communicatively connected to the base station. Here, it is further to be noted that the electronic device 700 may be implemented in a chip level or an apparatus level. For example, the electronic device 700 may function as the base station itself and may further include external devices such as a memory and a transceiver (not shown). The memory may be configured to store programs to be executed and related data information when the base station implements various functions. The transceiver may include one or more communication interfaces to support communications with different devices (for example, a user equipment and other base station). Implementations of the transceiver are not limited herein.

As an example, the user equipment may be the electronic device 400 described above, and the electronic device 700 may be a base station corresponding to the electronic device 400 as the user equipment. For the description of the downlink signal for monitoring whether a beam fails, the channel quality characterized by the downlink signal, the first threshold, the second count value, the second threshold, the third count value, the beam failure recovery request, and the like, references are made to the description in the corresponding part of the electronic device 400, which are not repeated herein.

The electronic device 700 according to the embodiment of the present disclosure may perform partial beam failure recovery in advance when a beam failure occurs in part of the links between the electronic device 700 and the user equipment, so that possibility of all link failures is greatly reduced, thereby effectively improving communication quality, and meeting requirements of VIP users for high communication quality of the communication link.

As an example, the second processing unit 702 may be configured to receive a beam failure recovery request through an uplink control channel. The beam failure recovery request includes information about an ID of a failed beam.

As an example, the uplink control channel may be a physical uplink control channel (PUCCH).

For the description of the information about the ID of the failed beam, reference is made to the description in the corresponding part of the electronic device 400, which is not repeated herein

As an example, the electronic device 700 may communicate with a new beam designated for the user equipment instead of the failed beam.

For the description of replacing the failed beam with a new beam, reference is made to the description in the corresponding part of the electronic device 400 (for example, Figure 5), which is not repeated herein.

While describing the electronic device for wireless communication in the embodiments above, some processes or methods are also disclosed. Hereinafter, an overview of the methods is given without repeating some details that are discussed above. However, it should be noted that, although the methods are disclosed while describing the electronic device for wireless communication, the methods unnecessarily adopt or are unnecessarily performed by the aforementioned components. For example, the embodiments of the electronic device for wireless communication may be partially or completely implemented with hardware and/or firmware, and the method for wireless communication described below may be performed by a computer-executable program completely, although the hardware and/or firmware for the electronic device for wireless communication may also be used in the methods.

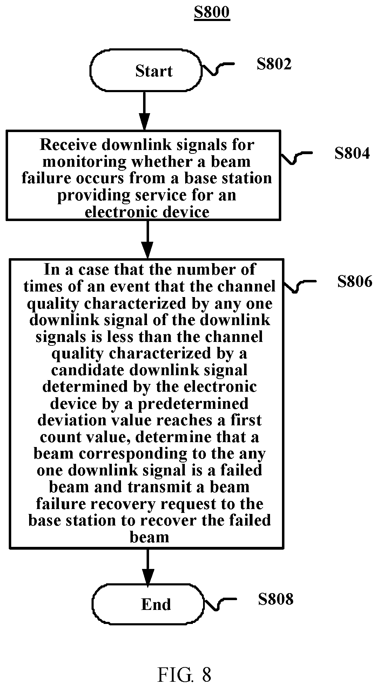

Figure 8 is a flow chart of a method S800 for wireless communication according to an embodiment of the present disclosure. The method S800 for wireless communication starts from step S802. In step S804, downlink signals for monitoring whether a beam failure occurs is received from a base station providing service for an electronic device. In step S806, in a case that the number of times of an event that the channel quality characterized by any one downlink signal of the downlink signals is less than the channel quality characterized by a candidate downlink signal determined by the electronic device by a predetermined deviation value reaches a first count value, it is determined that a beam corresponding to the any one downlink signal is a failed beam, and a beam failure recovery request is transmitted to the base station to recover the failed beam. The method S800 for wireless communication ends at step S808. The method S800 for wireless communication may be performed at a UE side.

The method may be performed, for example, by the electronic device 100 in the above embodiment described above. For specific details, reference is made to the description in the corresponding part described above, which is not be repeated herein.

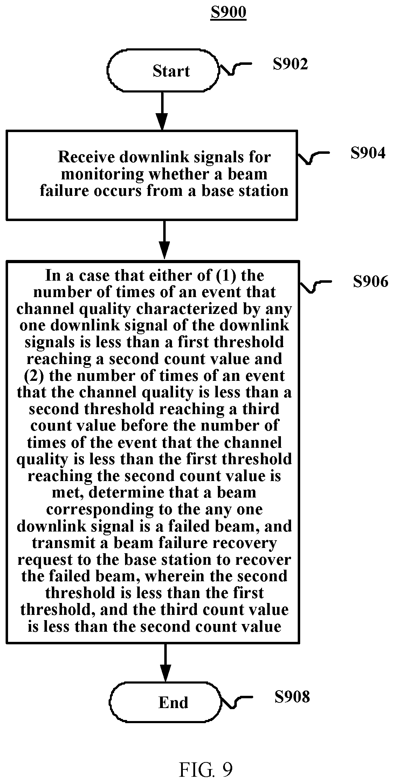

Figure 9 is a flow chart of a method S900 for wireless communication according to another embodiment of the present disclosure. The method S900 for wireless communication starts from step S902. In step S904, downlink signals for monitoring whether a beam failure occurs are received from a base station. In step S906, in a case that either of (1) the number of times of an event that the channel quality characterized by any one of the downlink signal is less than a first threshold reaching a second count value and (2) the number of times of an event that the channel quality is less than a second threshold reaching a third count value before the number of times of the event that the channel quality is less than the first threshold reaching the second count value is met, it is determined that a beam corresponding to the any one downlink signal is the failed beam, and a beam failure recovery request is transmitted to the base station, to recover the failed beam. The second threshold is less than the first threshold, and the third count value is less than the second count value. The method S900 for wireless communication ends at step S908. The method S900 for wireless communication may be performed at a UE side.

The method may be performed, for example, by the electronic device 400 in the above embodiment described above. For specific details, reference is made to the description in the corresponding part described above, which is not repeated herein.

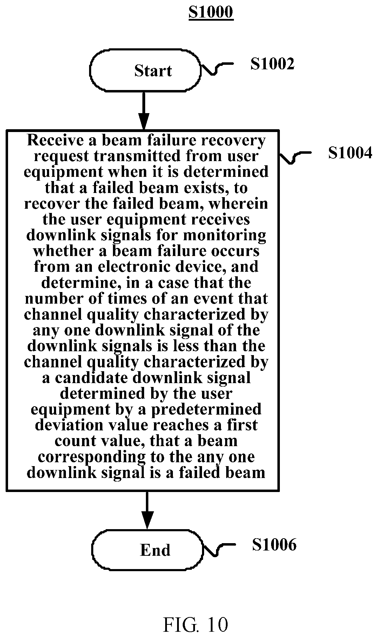

Figure 10 is a flow chart of a method 51000 for wireless communication according to another embodiment of the present disclosure. The method S1000 for wireless communication starts from step S1002. In step S1004, a beam failure recovery request is received from user equipment when it is determined that a failed beam exists, to recover the failed beam, wherein the user equipment receives downlink signals for monitoring whether a beam failure occurs from an electronic device, and determines, in a case that the number of times of an event that the channel quality characterized by any one of the downlink signal is less than the channel quality characterized by a candidate downlink signal determined by the user equipment by a predetermined deviation value reaches a first count value, that a beam corresponding to the any one downlink signal is a failed beam. The method 51000 for wireless communication ends at step S1006. The method 51000 for wireless communication may be performed at the base station side.

The method may be performed, for example, by the electronic device 600 in the above embodiment described above. For specific details, reference is made to the description in the corresponding part described above, which is not repeated herein.

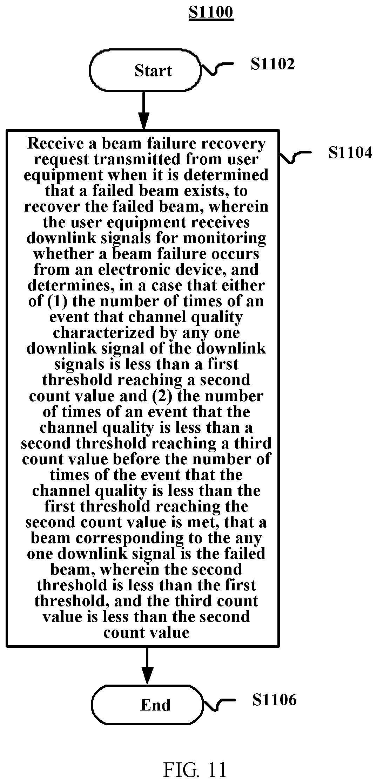

Figure 11 is a flow chart of a method S1100 for wireless communication according to another embodiment of the present disclosure. The method S1100 for wireless communication starts from step S1102. In step S1104, a beam failure recovery request is received from user equipment when it is determined that a failed beam exists, to recover the failed beam, where the user equipment receives downlink signals for monitoring whether a beam failure occurs from an electronic device, and determines, in a case that either of (1) the number of times of an event that the channel quality characterized by any one downlink signal of the downlink signals is less than a first threshold reaching a second count value and (2) the number of times of an event that the channel quality is less than a second threshold reaching a third count value before the number of times of an event that the channel quality is less than the first threshold reaching the second count value is met, that a beam corresponding to the any one downlink signal is the failed beam. The second threshold is less than the first threshold, and the third count value is less than the second count value. The method S 1100 for wireless communication ends at step S1106. The method S1100 for wireless communication may be performed at the base station side.

The method may be performed, for example, by the electronic device 700 in the above embodiment described above. For specific details, reference is made to the description in the corresponding part described above, which is not repeated herein.

It should be noted that each of the above methods may be used in combination or separately.

The technology of the present disclosure is appliable to various products.

For example, the electronic device 100 and the electronic device 400 may be implemented as various user equipments. The user equipment may be implemented as a mobile terminal (such as a smartphone, a tablet personal computer (PC), a notebook PC, a portable game terminal, a portable/dongle-type mobile router, and a digital camera) or an in-vehicle terminal (such as a car navigation device). The user equipment may further be implemented as a terminal (that is also referred to as a machine type communication (MTC) terminal) that performs machine-to-machine (M2M) communication. Furthermore, the user equipment may be a radio communication module (such as an integrated circuit module including a single die) mounted on each of the terminals.

For example, the electronic device 600 and the electronic device 700 may be implemented as various base stations. The base station may be implemented as any type of evolution node B (eNB), or gNB (a 5G base station). The eNB includes, for example, a macro eNB and a small eNB. The small eNB may be an eNB covering a cell smaller than a macro cell, such as a pico eNB, a micro eNB or a home (femto) eNB. For the gNB, the case may also be similar to that for eNB. Alternatively, the base station may be implemented as any other type of base station, such as a NodeB and a base transceiver station (BTS). The electronic device may include: a main body (also referred to as a base station device) configured to control wireless communication; and one or more remote radio heads (RRH) arranged at positions different from the main body. In addition, various types of user equipment may each operate as a base station by performing functions of the base station temporarily or in a semi-persistent manner. various types of user equipment may each operate as the base station by temporarily or semi-persistently executing a base station function.

### [Application Example on the Base Station]

### (First Application Example)

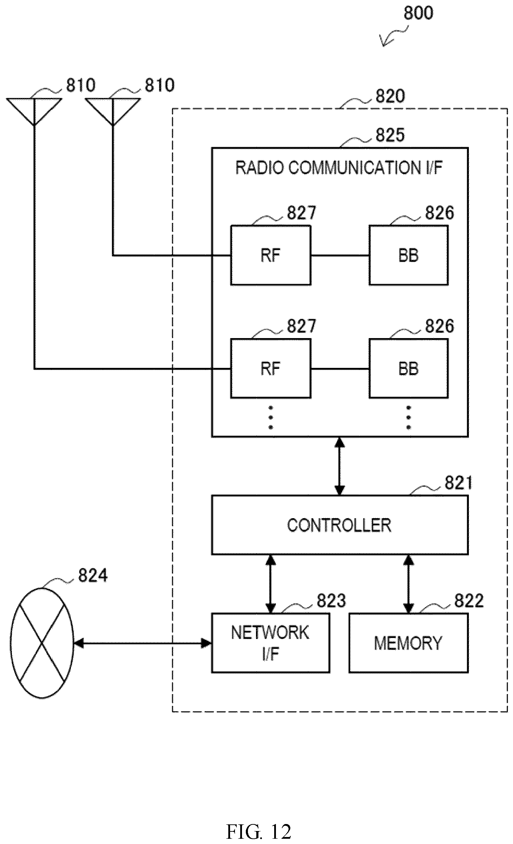

Figure 12 is a block diagram showing a first schematic configuration example of an eNB or a gNB to which the technology of the present disclosure may be applied. It should be noted that, the following description is given with an example of an eNB, but is also applicable to a gNB. An eNB 800 includes one or more antennas 810 and a base station device 820. The base station device 820 and each antenna 810 may be connected to each other via an RF cable.

Each of the antennas 810 includes a single or multiple antenna elements (such as multiple antenna elements included in a multi-input multi-output (MIMO) antenna), and is used for the base station device 820 to transmit and receive wireless signals. As shown in Figure 12, the eNB 800 may include the multiple antennas 810. For example, the multiple antennas 810 may be compatible with multiple frequency bands used by the eNB 800. Although Figure 12 shows the example in which the eNB 800 includes the multiple antennas 810, the eNB 800 may also include a single antenna 810.

The base station device 820 includes a controller 821, a memory 822, a network interface (I/F) 823, and a radio communication interface 825.

The controller 821 may be, for example, a CPU or a DSP, and operates various functions of a higher layer of the base station device 820. For example, the controller 821 generates a data packet from data in signals processed by the radio communication interface 825, and transfers the generated packet via the network interface 823. The controller 821 may bundle data from multiple base band processors to generate the bundled packet, and transfer the generated bundled packet. The controller 821 may have logical functions of performing control such as radio resource control, radio bearer control, mobility management, admission control and scheduling. The control may be performed in corporation with an eNB or a core network node in the vicinity. The memory 822 includes a RAM and a ROM, and stores a program executed by the controller 821, and various types of control data (such as a terminal list, transmission power data, and scheduling data).

The network interface 823 is a communication interface for connecting the base station device 820 to a core network 824. The controller 821 may communicate with a core network node or another eNB via the network interface 823. In this case, the eNB 800, and the core network node or the other eNB may be connected to each other via a logical interface (such as an S1 interface and an X2 interface). The network interface 823 may also be a wired communication interface or a radio communication interface for wireless backhaul. If the network interface 823 is a radio communication interface, the network interface 823 may use a higher frequency band for wireless communication than a frequency band used by the radio communication interface 825.

The radio communication interface 825 supports any cellular communication scheme (such as Long Term Evolution (LTE) and LTE-Advanced), and provides wireless connection to a terminal positioned in a cell of the eNB 800 via the antenna 810. The radio communication interface 825 may typically include, for example, a BB processor 826 and an RF circuit 827. The BB processor 826 may perform, for example, encoding/decoding, modulating/demodulating, and multiplexing/demultiplexing, and performs various types of signal processing of layers (such as L1, medium access control (MAC), radio link control (RLC), and a packet data convergence protocol (PDCP)). The BB processor 826 may have a part or all of the above-described logical functions instead of the controller 821. The BB processor 826 may be a memory that stores a communication control program, or a module that includes a processor and a related circuit configured to execute the program. Updating the program may allow the functions of the BB processor 826 to be changed. The module may be a card or a blade that is inserted into a slot of the base station device 820. Alternatively, the module may also be a chip that is mounted on the card or the blade. In addition, the RF circuit 827 may include, for example, a mixer, a filter, and an amplifier, and transmits and receives wireless signals via the antenna 810.

As shown in Figure 12, the radio communication interface 825 may include the multiple BB processors 826. For example, the multiple BB processors 826 may be compatible with multiple frequency bands used by the eNB 800. As shown in Figure 12, the radio communication interface 825 may include the multiple RF circuits 827. For example, the multiple RF circuits 827 may be compatible with multiple antenna elements. Although Figure 12 shows the example in which the radio communication interface 825 includes the multiple BB processors 826 and the multiple RF circuits 827, the radio communication interface 825 may also include a single BB processor 826 or a single RF circuit 827.

In the eNB 800 shown in Figure 12, transceivers of the electronic device 600 and the electronic device 700 with reference to Figures 6 and 7 may be implemented by the radio communication interface 825. At least part of the functions may be implemented by the controller 821. For example, the controller 821 may perform partial beam failure recovery by performing the functions of the first processing unit 602 described above with reference to Figure 6 and the second processing unit 702 described above with reference to Figure 7.

### (Second Application Example)

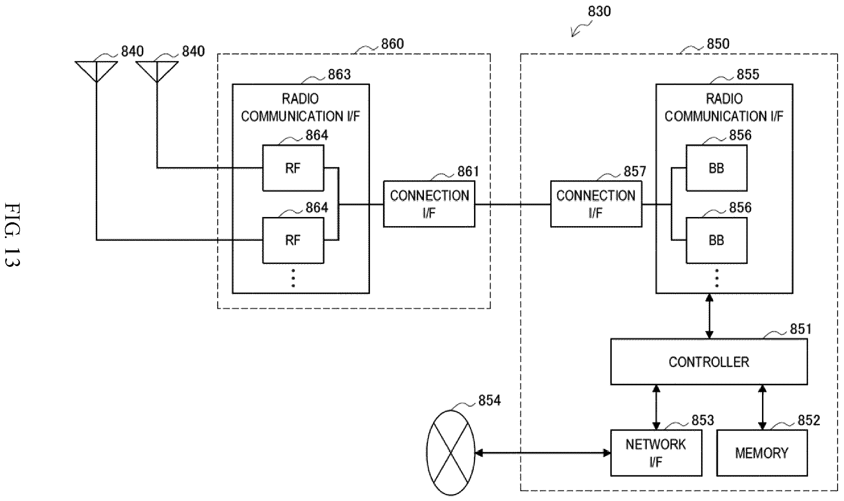

Figure 13 is a block diagram showing a second schematic configuration example of an eNB or a gNB to which the technology of the present disclosure may be applied. It should be noted that, the following description is given with an example of an eNB, but is also applicable to a gNB. An eNB 830 includes one or more antennas 840, a base station device 850 and a RRH 860. The RRH 860 and each antenna 840 may be connected to each other via an RF cable. The base station device 850 and the RRH 860 may be connected to each other via a high-speed line such as an optical fiber cable.

Each of the antennas 840 includes a single or multiple antenna elements (such as multiple antenna elements included in an MIMO antenna), and is used for the RRH 860 to transmit and receive wireless signals. As shown in Figure 13, the eNB 830 may include the multiple antennas 840. For example, the multiple antennas 840 may be compatible with multiple frequency bands used by the eNB 830. Although Figure 13 shows the example in which the eNB 830 includes the multiple antennas 840, the eNB 830 may also include a single antenna 840.

The base station device 850 includes a controller 851, a memory 852, a network interface 853, a radio communication interface 855, and a connection interface 857. The controller 851, the memory 852, and the network interface 853 are the same as the controller 821, the memory 822, and the network interface 823 described with reference to Figure 12.

The radio communication interface 855 supports any cellular communication scheme (such as LTE and LTE-Advanced), and provides wireless communication to a terminal positioned in a sector corresponding to the RRH 860 via the RRH 860 and the antenna 840. The radio communication interface 855 may typically include, for example, a BB processor 856. The BB processor 856 is the same as the BB processor 826 described with reference to Figure 12, except that the BB processor 856 is connected to an RF circuit 864 of the RRH 860 via the connection interface 857. As shown in Figure 13, the radio communication interface 855 may include the multiple BB processors 856. For example, the multiple BB processors 856 may be compatible with multiple frequency bands used by the eNB 830. Although Figure 13 shows the example in which the radio communication interface 855 includes the multiple BB processors 856, the radio communication interface 855 may also include a single BB processor 856.

The connection interface 857 is an interface for connecting the base station device 850 (the radio communication interface 855) to the RRH 860. The connection interface 857 may also be a communication module for communication in the above-described high-speed line that connects the base station device 850 (the radio communication interface 855) to the RRH 860.

The RRH 860 includes a connection interface 861 and a radio communication interface 863.

The connection interface 861 is an interface for connecting the RRH 860 (the radio communication interface 863) to the base station device 850. The connection interface 861 may also be a communication module for communication in the above-described high-speed line.

The radio communication interface 863 transmits and receives wireless signals via the antenna 840. The radio communication interface 863 may typically include, for example, the RF circuit 864. The RF circuit 864 may include, for example, a mixer, a filter, and an amplifier, and transmits and receives wireless signals via the antenna 840. As shown in Figure 13, the radio communication interface 863 may include multiple RF circuits 864. For example, the multiple RF circuits 864 may support multiple antenna elements. Although Figure 13 shows the example in which the radio communication interface 863 includes the multiple RF circuits 864, the radio communication interface 863 may also include a single RF circuit 864.

In the eNB 830 shown in Figure 13, transceivers of the electronic device 600 and the electronic device 700 with reference to Figures 6 and 7 may be implemented by the radio communication interface 855. At least part of the functions may be implemented by the controller 851. For example, the controller 851 may perform partial beam failure recovery by performing the functions of the first processing unit 602 described above with reference to Figure 6 and the second processing unit 702 described above with reference to Figure 7.

### [Application Example On User Equipment]

### (First Application Example)

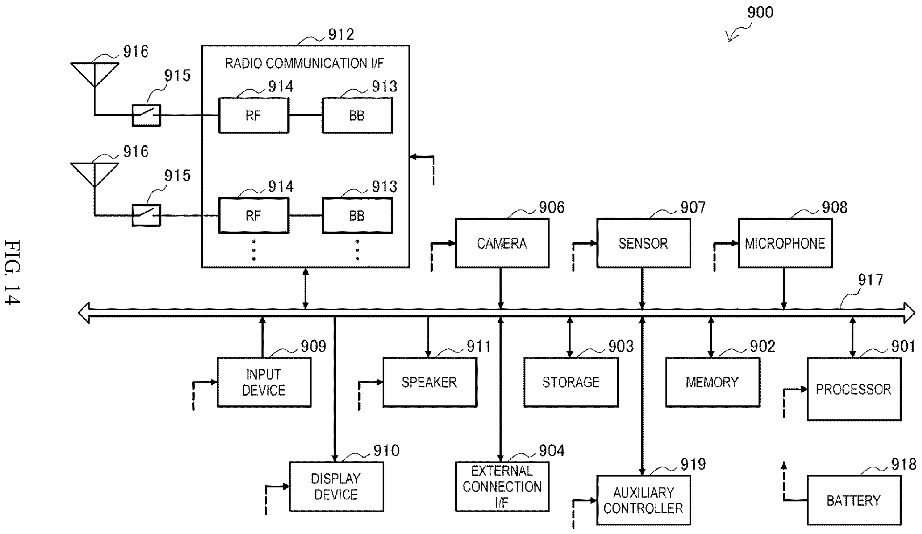

Figure 14 is a block diagram showing a schematic configuration example of a smart phone 900 to which the technology of the present disclosure may be applied. The smart phone 900 includes a processor 901, a memory 902, a storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be, for example, a CPU or a system on a chip (SoC), and controls functions of an application layer and another layer of the smart phone 900. The memory 902 includes RAM and ROM, and stores a program executed by the processor 901 and data. The storage 903 may include a storage medium such as a semiconductor memory and a hard disk. The external connection interface 904 is an interface for connecting an external apparatus (such as a memory card and a universal serial bus (USB) apparatus) to the smart phone 900.

The camera 906 includes an image sensor (such as a charge coupled device (CCD) and a complementary metal oxide semiconductor (CMOS)), and generates a captured image. The sensor 907 may include a group of sensors such as a measurement sensor, a gyro sensor, a geomagnetic sensor, and an acceleration sensor. The microphone 908 converts sounds that are inputted to the smart phone 900 to audio signals. The input device 909 includes, for example, a touch sensor configured to detect touch onto a screen of the display device 910, a keypad, a keyboard, a button, or a switch, and receive an operation or information inputted from a user. The display device 2510 includes a screen (such as a liquid crystal display (LCD) and an organic light-emitting diode (OLED) display), and displays an output image of the smart phone 900. The speaker 911 converts audio signals that are outputted from the smart phone 900 to sounds.

The radio communication interface 912 supports any cellular communication scheme (such as LTE and LTE-Advanced), and performs wireless communication. The radio communication interface 912 may typically include, for example, a BB processor 913 and a RF circuit 914. The BB processor 913 may perform, for example, encoding/decoding, modulating/demodulating, and multiplexing/demultiplexing, and performs various types of signal processing for wireless communication. In addition, the RF circuit 914 may include, for example, a mixer, a filter, and an amplifier, and transmits and receives wireless signals via the antenna 916. Note that, although the figure shows a circumstance where one RF link is connected with one antenna, this is only schematic, and a circumstance where one RF link is connected with multiple antennas through multiple phase shifters is also included. The radio communication interface 912 may be a chip module having the BB processor 913 and the RF circuit 914 integrated thereon. As shown in Figure 14, the radio communication interface 912 may include multiple BB processors 913 and multiple RF circuits 914. Although Figure 14 shows the example in which the radio communication interface 912 includes the multiple BB processors 913 and the multiple RF circuits 914, the radio communication interface 912 may also include a single BB processor 913 or a single RF circuit 914.

Furthermore, in addition to a cellular communication scheme, the radio communication interface 912 may support another type of wireless communication scheme such as a short-distance wireless communication scheme, a near field communication scheme, and a wireless local area network (LAN) scheme. In this case, the radio communication interface 912 may include the BB processor 913 and the RF circuit 914 for each wireless communication scheme.

Each of the antenna switches 915 switches connection destinations of the antennas 916 among multiple circuits (such as circuits for different wireless communication schemes) included in the radio communication interface 912.

Each of the antennas 916 includes a single or multiple antenna elements (such as multiple antenna elements included in an MIMO antenna), and is used for the radio communication interface 912 to transmit and receive wireless signals. As shown in Figure 14, the smart phone 900 may include the multiple antennas 916. Although Figure 14 shows the example in which the smart phone 900 includes the multiple antennas 916, the smart phone 900 may also include a single antenna 916.

Furthermore, the smart phone 900 may include the antenna 916 for each wireless communication scheme. In this case, the antenna switches 915 may be omitted from the configuration of the smart phone 900.

The bus 917 connects the processor 901, the memory 902, the storage 903, the external connection interface 904, the camera 906, the sensor 907, the microphone 908, the input device 909, the display device 910, the speaker 911, the radio communication interface 912, and the auxiliary controller 919 to each other. The battery 918 supplies power to blocks of the smart phone 900 shown in Figure 14 via feeder lines that are partially shown as dashed lines in the Figure 14. The auxiliary controller 919 operates a minimum necessary function of the smart phone 900, for example, in a sleep mode.

In the smart phone 900 shown in Figure 14, transceivers of the electronic device 100 and the electronic device 400 with reference to Figures 1 and 4 may be implemented by the radio communication interface 912. At least part of the functions may be implemented by the processor 901 or the auxiliary controller 919. For example, the processor 901 or the auxiliary controller 919 may perform partial beam failure recovery by performing the functions of the first determination unit 104 described above with reference to Figure 1 and the second determination unit 404 described above with reference to Figure 4.

### (Second Application example)

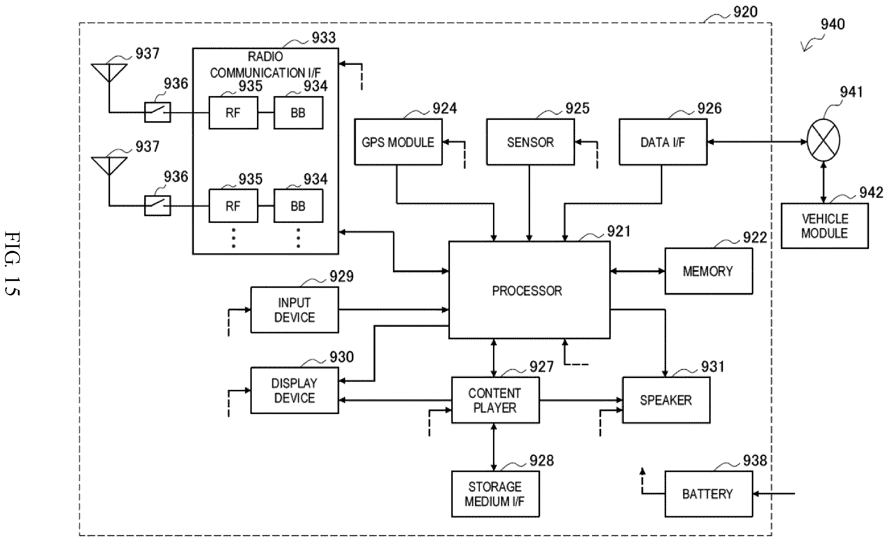

Figure 15 is a block diagram showing a schematic configuration example of a car navigation apparatus 920 to which the technology of the present disclosure may be applied. The car navigation apparatus 920 includes a processor 921, a memory 922, a global positioning system (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be, for example, a CPU or a SoC, and controls a navigation function and another function of the car navigation apparatus 920. The memory 922 includes a RAM and a ROM, and stores a program executed by the processor 921 and data.

The GPS module 924 determines a position (such as latitude, longitude, and altitude) of the car navigation apparatus 920 by using GPS signals received from a GPS satellite. The sensor 925 may include a group of sensors such as a gyro sensor, a geomagnetic sensor, and an air pressure sensor. The data interface 926 is connected to, for example, an in-vehicle network 941 via a terminal that is not shown, and acquires data (such as vehicle speed data) generated by the vehicle.

The content player 927 reproduces content stored in a storage medium (such as a CD and a DVD) that is inserted into the storage medium interface 928. The input device 929 includes, for example, a touch sensor configured to detect touch onto a screen of the display device 930, a button or a switch, and receives an operation or information inputted from a user. The display device 930 includes a screen such as an LCD or an OLED display, and displays an image of the navigation function or content that is reproduced. The speaker 931 outputs sounds of the navigation function or the content that is reproduced.

The radio communication interface 933 supports any cellular communication scheme (such as LTE and LTE-Advanced), and performs wireless communication. The radio communication interface 933 may typically include, for example, a BB processor 934 and an RF circuit 935. The BB processor 934 may perform, for example, encoding/decoding, modulating/demodulating, and multiplexing/demultiplexing, and performs various types of signal processing for wireless communication. In addition, the RF circuit 935 may include, for example, a mixer, a filter, and an amplifier, and transmits and receives wireless signals via the antenna 937. The radio communication interface 933 may also be a chip module having the BB processor 934 and the RF circuit 935 integrated thereon. As shown in Figure 15, the radio communication interface 933 may include the multiple BB processors 934 and the multiple RF circuits 935. Although Figure 15 shows the example in which the radio communication interface 933 includes the multiple BB processors 934 and the multiple RF circuits 935, the radio communication interface 933 may also include a single BB processor 934 or a single RF circuit 935.

Furthermore, in addition to the cellular communication scheme, the radio communication interface 933 may support another type of wireless communication scheme such as a short-distance wireless communication scheme, a near field communication scheme, and a wireless LAN scheme. In this case, the radio communication interface 933 may include the BB processor 934 and the RF circuit 935 for each wireless communication scheme.

Each of the antenna switches 936 switches connection destinations of the antennas 937 among multiple circuits (such as circuits for different wireless communication schemes) included in the radio communication interface 933.

Each of the antennas 937 includes a single or multiple antenna elements (such as multiple antenna elements included in an MIMO antenna), and is used for the radio communication interface 933 to transmit and receive wireless signals. As shown in Figure 15, the car navigation apparatus 920 may include the multiple antennas 937. Although Figure 15 shows the example in which the car navigation apparatus 920 includes the multiple antennas 937, the car navigation apparatus 920 may also include a single antenna 937.

Furthermore, the car navigation apparatus 920 may include the antenna 937 for each wireless communication scheme. In this case, the antenna switches 936 may be omitted from the configuration of the car navigation apparatus 920.

The battery 938 supplies power to blocks of the car navigation apparatus 920 shown in Figure 15 via feeder lines that are partially shown as dashed lines in the Figure 15. The battery 938 accumulates power supplied from the vehicle.

In the car navigation apparatus 920 shown in Figure 15, transceivers of the electronic device 100 and the electronic device 400 with reference to Figures 1 and 4 may be implemented by the radio communication interface 933. At least part of the functions may be implemented by the controller 921. For example, the controller 921 may perform partial beam failure recovery by performing the functions of the first determination unit 104 described above with reference to Figure 1 and the second determination unit 404 described above with reference to Figure 4.

The technology of the present disclosure may also be implemented as an in-vehicle system (or a vehicle) 940 including one or more blocks of the car navigation apparatus 920, the in-vehicle network 941 and a vehicle module 942. The vehicle module 942 generates vehicle data (such as a vehicle speed, an engine speed or failure information), and outputs the generated data to the in-vehicle network 941.

The basic principle of the present disclosure is described above in conjunction with particular embodiments. However, for those skilled in the art, it may be understood that all or any of the steps or components of the method and apparatus according to the present disclosure may be implemented with hardware, firmware, software or a combination thereof in any computing device (including a processor, a storage medium, and the like) or a network of computing devices by those skilled in the art in light of the present disclosure and making use of their general circuit designing knowledge or general programming skills.

Moreover, a program product storing machine-readable instruction codes is further provided according to the present disclosure. The instruction codes, when read and executed by a machine, perform the method according to the embodiments of the present disclosure described above.

Accordingly, a storage medium for carrying the above program product storing the machine-readable instruction codes is further included in the present disclosure. The storage medium includes but is not limited to, a floppy disk, an optical disk, a magneto-optical disk, a storage card, a memory stick and the like.

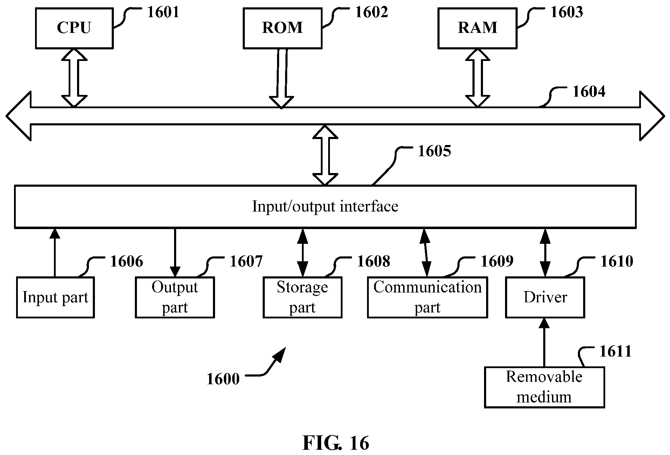

In the case where the present disclosure is implemented with software or firmware, a program constituting the software is installed in a computer with a dedicated hardware structure (for example, the general computer 1600 shown in Figure 16) from a storage medium or network. The computer is capable of implementing various functions when installed with various programs.

In Figure 16, a central processing unit (CPU) 1601 performs various types of processing according to programs stored in a read only memory (ROM) 1602 or programs loaded from a storage part 1608 to a random-access memory (RAM) 1603. In the RAM 1603, data required for the CPU 1601 to perform various processes or the like is also stored as necessary. The CPU 1601, the ROM 1602 and the RAM 1603 are linked with each other via a bus 1604. An input/output interface 2005 is also connected to the bus 1604.

The following components are linked to the input/output interface 1605: an input part 1606 (including a keyboard, a mouse or the like), an output part 1607 (including a display such as a cathode ray tube (CRT), a liquid crystal display (LCD), a speaker or the like), a storage part 1608 (including a hard disk or the like), and a communication part 1609 (including a network interface card such as a LAN card, a modem or the like). The communication part 1609 performs communication processing via a network such as the Internet. A driver 1610 may also be linked to the input/output interface 1605 as needed. A removable medium 1611 such as a magnetic disk, an optical disk, a magneto-optical disk and a semiconductor memory may be installed on the driver 1610 as needed, such that the computer programs read from the removable medium 1611 are installed in the storage part 1608 as needed.

In a case that the series of processing described above is implemented by software, programs constituting the software are installed from a network such as the Internet or a storage medium such as the removable medium 1611.

Those skilled in the art should understand that the storage medium is not limited to the removable medium 1611 shown in Figure 16 in which programs are stored and which is distributed separately from the apparatus to provide the programs to the user. An example of the removable medium 1611 includes: a magnetic disk (including a floppy disk (registered trademark)), an optical disk (including a compact disk read only memory (CD-ROM) and a digital versatile disk (DVD)), a magneto-optical disk (including a mini-disk (MD) (registered trademark)) and a semiconductor memory. Alternatively, the storage medium may be the ROM 1602, a hard disk included in the storage part 1608 or the like. The programs are stored in the storage medium, and the storage medium is distributed to the user together with the device including the storage medium.

To be further noted, in the device, method and system according to the present disclosure, the respective components or steps can be decomposed and/or recombined. These decompositions and/or recombinations are regarded as equivalent solutions of the disclosure. Moreover, the above series of processing steps may naturally be performed temporally in the sequence as described above but be not limited thereto. Some steps may be performed in parallel or independently from each other.

At last, it should be noted that terms of "include", "comprise", or any other variants are intended to be non-exclusive. Therefore, a process, method, article, or device including multiple elements includes not only the elements but also other elements that are not enumerated, or also includes the elements inherent for the process, method, article or device. Unless expressively limited otherwise, the statement "comprising (including) one..." does not exclude the case that other similar elements may exist in the process, method, article or device.

Although the embodiments of the present disclosure are described above in detail in connection with the drawings, it shall be appreciated that the embodiments as described above are merely illustrative rather than limitative of the present disclosure. Those skilled in the art can make various modifications and variations to the above embodiments without departing from the spirit and scope of the present disclosure. Therefore, the scope of the present disclosure is defined merely by the appended claims and their equivalents.

The technology may also be implemented as follows.
Item 1. An electronic device for wireless communication, including:
   processing circuitry configured to:
   receive downlink signals for monitoring whether a beam failure occurs from a base station providing service for the electronic device; and
   in a case that the number of times of an event that channel quality characterized by any one downlink signal of the downlink signals is less than the channel quality characterized by a candidate downlink signal determined by the electronic device by a predetermined deviation value reaches a first count value, determine that a beam corresponding to the any one downlink signal is a failed beam and transmit a beam failure recovery request to the base station to recover the failed beam.
Item 2. The electronic device according to item 1, where the processing circuitry is configured to:
   transmit the beam failure recovery request at an occasion of an uplink control channel immediately after the failed beam is determined in time, and where the beam failure recovery request includes information of ID characterizing the failed beam.
Item 3. The electronic device according to item 2, where the processing circuitry is configured to:
   give up transmitting the beam failure recovery request at the occasion, and transmit the beam failure recovery request at an occasion of a next uplink control channel, in a case that the electronic device has symmetry between a downlink beam and an uplink beam and the uplink control channel corresponds to the failed beam.
Item 4. The electronic device according to item 2 or 3, where the uplink control channel is a physical uplink control channel, PUCCH.
Item 5. The electronic device according to item 4, where the processing circuitry is configured to:
   associate an ID of the downlink signal with an ID of scheduling request resource in the PUCCH, to characterize the ID of the failed beam corresponding to the any one downlink signal by the ID of the scheduling request resource.
Item 6. The electronic device according to item 4, where the processing circuitry is configured to:
   characterize the ID of the failed beam by setting a parameter of a predetermined cyclic shift sequence in a PUCCH format 0.
Item 7. The electronic device according to item 4, where the processing circuitry is configured to:
   characterize the ID of the failed beam by using a predetermined information bit in a PUCCH format 1.
Item 8. The electronic device according to any one of items 1 to 7, where the processing circuitry is configured to:
   further transmit information about the candidate downlink signal to the base station, and replace the failed beam with a beam corresponding to the candidate downlink signal.
Item 9. The electronic device according to item 8, where the processing circuitry is configured to:
   transmit the information about the candidate downlink signal to the base station using a media access control control-element, MAC CE.
Item 10. The electronic device according to item 8 or 9, where the processing circuitry is configured to:
   replace the failed beam with the beam corresponding to the candidate downlink signal when a confirmation of correct decoding of the information about the candidate downlink signal by the base station is received via a downlink control channel.
Item 11. The electronic device according to any one of items 1 to 10, where the processing circuitry is configured to:
   characterize the channel quality using a block error rate.
Item 12. An electronic device for wireless communication, including:
   processing circuitry, configured to:
   receive downlink signals for monitoring whether a beam failure occurs from a base station providing service for the electronic device; and
   in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, determine that a beam corresponding to the any one downlink signal is a failed beam and transmit a beam failure recovery request to the base station to recover the failed beam,
   wherein the second threshold is less than the first threshold, and the third count value is less than the second count value.
Item 13. The electronic device according to item 12, where the processing circuitry is configured to:
   transmit the beam failure recovery request at an occasion of an uplink control channel immediately after the failed beam is determined in time, and where the beam failure recovery request includes information of ID characterizing the failed beam.
Item 14. The electronic device according to item 13, where the processing circuitry is configured to:
   give up transmitting the beam failure recovery request at the occasion, and transmit the beam failure recovery request at an occasion of a next uplink control channel, in a case that the electronic device has symmetry between a downlink beam and an uplink beam and the uplink control channel corresponds to the failed beam.
Item 15. The electronic device according to item 13 or 14, where the uplink control channel is a physical uplink control channel, PUCCH.
Item 16. The electronic device according to item 15, where the processing circuitry is configured to:
   associate an ID of the downlink signal with an ID of scheduling request resource in the PUCCH, to characterize an ID of the failed beam corresponding to the any one downlink signal by the ID of the scheduling request resource.
Item 17. The electronic device according to item 15, where the processing circuitry is configured to:
   characterize the ID of the failed beam by setting a parameter of a predetermined cyclic shift sequence in a PUCCH format 0.
Item 18. The electronic device according to item 15, where the processing circuitry is configured to:
   characterize the ID of the failed beam by using a predetermined information bit in a PUCCH format 1.
Item 19. The electronic device according to any one of items 12 to 18, where the processing circuitry is configured to:
   replace the failed beam based on a beam corresponding to information updated by the base station through a media access control control-element, MAC CE.
Item 20. The electronic device according to any one of items 12 to 19, where the processing circuitry is configured to:
   characterize the channel quality using a block error rate.
Item 21. An electronic device for wireless communication, including:
   processing circuitry, configured to:
   receive a beam failure recovery request transmitted from user equipment when it is determined that a failed beam exists, to recover the failed beam,
   where the user equipment receives downlink signals for monitoring whether a beam failure occurs from the electronic device, and determines, in a case that the number of times of an event that channel quality characterized by any one downlink signal of the downlink signals is less than the channel quality characterized by a candidate downlink signal determined by the user equipment by a predetermined deviation value reaches a first count value, that a beam corresponding to the any one downlink signal is a failed beam.
Item 22. The electronic device for wireless communication according to item 21, where the processing circuitry is configured to:
   receive the beam failure recovery request through an uplink control channel, where the beam failure recovery request includes information of an ID characterizing the failed beam.
Item 23. The electronic device for wireless communication according to item 22, where the processing circuitry is configured to:
   further receive information about the candidate downlink signal from the user equipment.
Item 24. The electronic device for wireless communication according to item 23, where the processing circuitry is configured to:
   confirm a correct decoding of information about the candidate downlink signal through a downlink control channel, to inform the user equipment to replace the failed beam with a beam corresponding to the candidate downlink signal.
Item 25. An electronic device for wireless communication, including:
   processing circuitry, configured to:
   receive a beam failure recovery request transmitted from user equipment when it is determined that a failed beam exists, to recover the failed beam,
   wherein the user equipment receives downlink signals for monitoring whether a beam failure occurs from the electronic device, and determines, in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, that a beam corresponding to the any one downlink signal is the failed beam,
   wherein the second threshold is less than the first threshold, and the third count value is less than the second count value.
Item 26. The electronic device for wireless communication according to item 25, where the processing circuitry is configured to:
   receive the beam failure recovery request through an uplink control channel, wherein the beam failure recovery request includes information of an ID characterizing the failed beam.
Item 27. A method for wireless communication, including:
   receiving downlink signals for monitoring whether a beam failure occurs from a base station providing service for an electronic device; and
   in a case that the number of times of an event that channel quality characterized by any one downlink signal of the downlink signals is less than the channel quality characterized by a candidate downlink signal determined by the electronic device by a predetermined deviation value reaches a first count value, determining that a beam corresponding to the any one downlink signal is a failed beam, and transmitting a beam failure recovery request to the base station to recover the failed beam.
Item 28. A method for wireless communication, including:
   receiving downlink signals for monitoring whether a beam failure occurs from a base station; and
   in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, determining that a beam corresponding to the any one downlink signal is a failed beam, and transmitting a beam failure recovery request to the base station, to recover the failed beam,
   wherein the second threshold is less than the first threshold, and the third count value is less than the second count value.
Item 29. A method for wireless communication, including:
   receiving a beam failure recovery request transmitted from user equipment when it is determined that a failed beam exists, to recover the failed beam,
   wherein the user equipment receives downlink signals for monitoring whether a beam failure occurs from an electronic device, and determines, in a case that the number of times of an event that channel quality characterized by any one downlink signal of the downlink signals is less than the channel quality characterized by a candidate downlink signal determined by the user equipment by a predetermined deviation value reaches a first count value, that a beam corresponding to the any one downlink signal is a failed beam.
Item 30. A method for wireless communication, including:
   receiving a beam failure recovery request transmitted from user equipment when it is determined that a failed beam exists, to recover the failed beam,
   wherein the user equipment receives downlink signals for monitoring whether a beam failure occurs from an electronic device, and determines, in a case that either of (1) the number of times of an event that channel quality characterized by any one downlink signal of the downlink signals is less than a first threshold reaching a second count value and (2) the number of times of an event that the channel quality is less than a second threshold reaching a third count value before the number of times of an event that the channel quality is less than the first threshold reaching the second count value is met, that a beam corresponding to the any one downlink signal is the failed beam,
   wherein the second threshold is less than the first threshold, and the third count value is less than the second count value.
Item 31. A computer readable storage medium storing computer executable instructions, wherein when the computer executable instructions are executed, the method for wireless communication according to any of items 27 to 30 is performed

## Claims

1. An electronic device for wireless communication, comprising:
processing circuitry configured to:
receive downlink signals for monitoring whether a beam failure occurs from a base station providing service for the electronic device; and
in a case that the number of times of an event that channel quality **characterized by** any one downlink signal of the downlink signals is less than the channel quality **characterized by** a candidate downlink signal determined by the electronic device by a predetermined deviation value reaches a first count value, determine that a beam corresponding to the any one downlink signal is a failed beam and transmit a beam failure recovery request to the base station to recover the failed beam.

2. The electronic device according to claim 1, wherein the processing circuitry is configured to:
transmit the beam failure recovery request at an occasion of an uplink control channel immediately after the failed beam is determined in time, and wherein the beam failure recovery request comprises information of ID characterizing the failed beam.

3. The electronic device according to claim 2, wherein the processing circuitry is configured to:
give up transmitting the beam failure recovery request at the occasion, and transmit the beam failure recovery request at an occasion of a next uplink control channel, in a case that the electronic device has symmetry between a downlink beam and an uplink beam and the uplink control channel corresponds to the failed beam.

4. The electronic device according to claim 2 or 3, wherein the uplink control channel is a physical uplink control channel, PUCCH.

5. The electronic device according to claim 4, wherein the processing circuitry is configured to:
associate an ID of the downlink signal with an ID of scheduling request resource in the PUCCH, to characterize the ID of the failed beam corresponding to the any one downlink signal by the ID of the scheduling request resource.

6. The electronic device according to claim 4, wherein the processing circuitry is configured to:
characterize the ID of the failed beam by setting a parameter of a predetermined cyclic shift sequence in a PUCCH format 0.

7. The electronic device according to claim 4, wherein the processing circuitry is configured to:
characterize the ID of the failed beam by using a predetermined information bit in a PUCCH format 1.

8. The electronic device according to any one of claims 1 to 7, wherein the processing circuitry is configured to:
further transmit information about the candidate downlink signal to the base station, and replace the failed beam with a beam corresponding to the candidate downlink signal.

9. The electronic device according to claim 8, wherein the processing circuitry is configured to:
transmit the information about the candidate downlink signal to the base station using a media access control control-element, MAC CE.

10. The electronic device according to claim 8 or 9, wherein the processing circuitry is configured to:
replace the failed beam with the beam corresponding to the candidate downlink signal when a confirmation of correct decoding of the information about the candidate downlink signal by the base station is received via a downlink control channel.

11. The electronic device according to any one of claims 1 to 10, wherein the processing circuitry is configured to:
characterize the channel quality using a block error rate.

12. An electronic device for wireless communication, comprising:
processing circuitry, configured to:
receive downlink signals for monitoring whether a beam failure occurs from a base station providing service for the electronic device; and
in a case that either of (1) the number of times of an event that channel quality **characterized by** any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, determine that a beam corresponding to the any one downlink signal is a failed beam and transmit a beam failure recovery request to the base station to recover the failed beam,
wherein the second threshold is less than the first threshold, and the third count value is less than the second count value.

13. The electronic device according to claim 12, wherein the processing circuitry is configured to:
transmit the beam failure recovery request at an occasion of an uplink control channel immediately after the failed beam is determined in time, and wherein the beam failure recovery request comprises information of ID characterizing the failed beam.

14. The electronic device according to claim 13, wherein the processing circuitry is configured to:
give up transmitting the beam failure recovery request at the occasion, and transmit the beam failure recovery request at an occasion of a next uplink control channel, in a case that the electronic device has symmetry between a downlink beam and an uplink beam and the uplink control channel corresponds to the failed beam.

15. The electronic device according to claim 13 or 14, wherein the uplink control channel is a physical uplink control channel, PUCCH.

16. The electronic device according to claim 15, wherein the processing circuitry is configured to:
associate an ID of the downlink signal with an ID of scheduling request resource in the PUCCH, to characterize an ID of the failed beam corresponding to the any one downlink signal by the ID of the scheduling request resource.

17. The electronic device according to claim 15, wherein the processing circuitry is configured to:
characterize the ID of the failed beam by setting a parameter of a predetermined cyclic shift sequence in a PUCCH format 0.

18. The electronic device according to claim 15, wherein the processing circuitry is configured to:
characterize the ID of the failed beam by using a predetermined information bit in a PUCCH format 1.

19. The electronic device according to any one of claims 12 to 18, wherein the processing circuitry is configured to:
replace the failed beam based on a beam corresponding to information updated by the base station through a media access control control-element, MAC CE.

20. The electronic device according to any one of claims 12 to 19, wherein the processing circuitry is configured to:
characterize the channel quality using a block error rate.

21. An electronic device for wireless communication, comprising:
processing circuitry, configured to:
receive a beam failure recovery request transmitted from user equipment when it is determined that a failed beam exists, to recover the failed beam,
wherein the user equipment receives downlink signals for monitoring whether a beam failure occurs from the electronic device, and determines, in a case that the number of times of an event that channel quality **characterized by** any one downlink signal of the downlink signals is less than the channel quality **characterized by** a candidate downlink signal determined by the user equipment by a predetermined deviation value reaches a first count value, that a beam corresponding to the any one downlink signal is a failed beam.

22. The electronic device for wireless communication according to claim 21, wherein the processing circuitry is configured to:
receive the beam failure recovery request through an uplink control channel, wherein the beam failure recovery request comprises information of an ID characterizing the failed beam.

23. The electronic device for wireless communication according to claim 22, wherein the processing circuitry is configured to:
further receive information about the candidate downlink signal from the user equipment.

24. The electronic device for wireless communication according to claim 23, wherein the processing circuitry is configured to:
confirm a correct decoding of information about the candidate downlink signal through a downlink control channel, to inform the user equipment to replace the failed beam with a beam corresponding to the candidate downlink signal.

25. An electronic device for wireless communication, comprising:
processing circuitry, configured to:
receive a beam failure recovery request transmitted from user equipment when it is determined that a failed beam exists, to recover the failed beam,
wherein the user equipment receives downlink signals for monitoring whether a beam failure occurs from the electronic device, and determines, in a case that either of (1) the number of times of an event that channel quality **characterized by** any one downlink signal of the downlink signals is less than a first threshold reaching a second count value and (2) the number of times of an event that the channel quality is less than a second threshold reaching a third count value before the number of times of the event that the channel quality is less than the first threshold reaches the second count value is met, that a beam corresponding to the any one downlink signal is the failed beam,
wherein the second threshold is less than the first threshold, and the third count value is less than the second count value.

26. The electronic device for wireless communication according to claim 25, wherein the processing circuitry is configured to:
receive the beam failure recovery request through an uplink control channel, wherein the beam failure recovery request comprises information of an ID characterizing the failed beam.

27. A method for wireless communication, comprising:
receiving downlink signals for monitoring whether a beam failure occurs from a base station providing service for an electronic device; and
in a case that the number of times of an event that channel quality **characterized by** any one downlink signal of the downlink signals is less than the channel quality **characterized by** a candidate downlink signal determined by the electronic device by a predetermined deviation value reaches a first count value, determining that a beam corresponding to the any one downlink signal is a failed beam, and transmitting a beam failure recovery request to the base station to recover the failed beam.

28. A method for wireless communication, comprising:
receiving downlink signals for monitoring whether a beam failure occurs from a base station; and
in a case that either of (1) the number of times of an event that channel quality **characterized by** any one downlink signal of the downlink signals is less than a first threshold reaching a second count value and (2) the number of times of an event that the channel quality is less than a second threshold reaching a third count value before the number of times of the event that the channel quality is less than the first threshold reaching the second count value is met, determining that a beam corresponding to the any one downlink signal is a failed beam, and transmitting a beam failure recovery request to the base station to recover the failed beam,
wherein the second threshold is less than the first threshold, and the third count value is less than the second count value.

29. A method for wireless communication, comprising:
receiving a beam failure recovery request transmitted from user equipment when it is determined that a failed beam exists, to recover the failed beam,
wherein the user equipment receives downlink signals for monitoring whether a beam failure occurs from an electronic device, and determines, in a case that the number of times of an event that channel quality **characterized by** any one downlink signal of the downlink signals is less than the channel quality **characterized by** a candidate downlink signal determined by the user equipment by a predetermined deviation value reaches a first count value, that a beam corresponding to the any one downlink signal is a failed beam.

30. A method for wireless communication, comprising:
receiving a beam failure recovery request transmitted from user equipment when it is determined that a failed beam exists, to recover the failed beam,
wherein the user equipment receives downlink signals for monitoring whether a beam failure occurs from an electronic device; and determines, in a case that either of (1) the number of times of an event that channel quality **characterized by** any one downlink signal of the downlink signals is less than a first threshold reaching a second count value and (2) the number of times of an event that the channel quality is less than a second threshold reaching a third count value before the number of times of an event that the channel quality is less than the first threshold reaching the second count value is met, that a beam corresponding to the any one downlink signal is the failed beam, and
the second threshold is less than the first threshold, and the third count value is less than the second count value.

31. A computer readable storage medium storing computer executable instructions, wherein when the computer executable instructions are executed, the method for wireless communication according to any of claims 27 to 30 is performed.
